# EUROPEAN PATENT APPLICATION

(11) **EP 3 542 928 A1**
(43) Date of publication of application: **25.09.2019**
(21) Application number: 18163570.7
(22) Date of filing: 23.03.2018
(51) Int. Cl.: B22F 3/105, B23K 26/03, B33Y 10/00, B33Y 30/00, B33Y 50/02, B29C 64/153

(54) **ADDITIVE MANUFACTURING DEVICE**

(71) Applicant: United Grinding Group Management AG, 3005 Bern (CH)
(72) Inventor: Cloots, Michael, 9008 St. Gallen (CH); Gutknecht, kai, 8730 Uznach (CH)
(74) Representative: Maiwald Patent- und Rechtsanwaltsgesellschaft mbH

(57) **Abstract**

The invention relates to an additive manufacturing device, an additive manufacturing system, an additive manufacturing method, a computer program element for controlling such device or system for performing such method, and a computer readable medium having stored such computer program element. The additive manufacturing device comprises a laser unit, a survey unit, and a control unit.

The laser unit is configured to irradiate a reference area in a powder material with different laser parameters to fuse the powder material. The survey unit is configured to survey the fusing of the powder material with different laser parameters to gather fusing data as a function of the respective laser parameter. The control unit is configured to control the laser unit to irradiate a product area in the powder material based on the fusing data.

## Description

### FIELD OF THE INVENTION

The invention relates to an additive manufacturing device, an additive manufacturing system, an additive manufacturing method, a computer program element for controlling such device or system for performing such method, and a computer readable medium having stored such computer program element.

### BACKGROUND OF THE INVENTION

For additive manufacturing, e.g., selective laser melting, the product quality strongly depends on a constant and maximum laser power or laser intensity and/or a stable focal position of the laser also keeping the laser power at maximum. The laser power and/or the focal position of the laser may change, e.g., due to temperature changes in the laser unit and/or in an optical unit of the additive manufacturing system.

EP 3 017 895 A1 discloses a method for producing a component by selective laser melting, wherein a number of lasers arranged next to one another generate a laser field, as a result of which powdery material can be melted in a selective manner for the purposes of generating contours. In the process, individual lasers of the laser arrangement can be switched on or off in a selective matter in order to irradiate or not irradiate certain regions.

There are conventional additive manufacturing systems in which laser parameters are checked before the actual product manufacturing is started, but these conventional systems can be improved.

### SUMMARY OF THE INVENTION

There may be a need to provide an improved additive manufacturing device, system and method, which allow improving the quality of products manufactured by additive manufacturing.

The problem of the present invention is solved by the subject-matters of the independent claims, wherein further embodiments are incorporated in the dependent claims. It should be noted that the aspects of the invention described in the following apply also to the additive manufacturing device, the additive manufacturing system, the additive manufacturing method, the computer program element, and the computer readable medium.

According to the present invention, an additive manufacturing device for additively manufacturing a product is presented. The additive manufacturing device comprises a laser unit, a survey unit, and a control unit.

The laser unit is configured to irradiate a reference area in a powder material with different laser parameters to fuse the powder material.

The survey unit is configured to survey the fusing of the powder material with different laser parameters to gather fusing data as a function of the respective laser parameter.

The control unit is configured to control the laser unit to irradiate a product area in the powder material based on the fusing data.

This can be understood in that a reference area of a powder material layer is irradiated before a product area of the powder material layer is irradiated and data and knowledge gained by the "first" irradiation of the reference area are used to improve the "second" irradiation of the product area. The powder material of the reference area and the powder material of the product area may be identical, but arranged at different locations of the same powder material layer or block or substrate. The irradiation of the reference area may therefore be understood as a simulation of the irradiation for the product in the product area.

The gain of knowledge by this simulation or pre-irradiation is further improved in that the powder material in the reference area is subsequently irradiated with different laser parameters. The single shots of such a series of irradiations with different laser parameters may be done at different locations of the reference area. For example, the reference area is irradiated at a point of time T1 with a laser parameter P1 at a location L1 and at a later point of time T2 with a laser parameter P2 at a location L2 up to n irradiations at still later points of time Tn with laser parameters Pn at locations Ln. The laser parameters P1, P2 to Pn may differ from each other. In addition, the locations L1, L2 to Ln may differ from each other. The laser parameter may be, e.g., a focal position of the laser unit.

These different irradiations may lead to different fusings of the powder material in the reference area, so that a supervision of these fusings may allow a gain of fusing data relating or assigning a respective laser parameter to a respective fusing result. For example, different fusings F1...n occur based on the different laser parameters P1...n and these different fusings F1...n are correlated to the different laser parameters P1...n to form the fusing data.

The fusing data can then be used as basis for an improved or adapted irradiation of the powder material in the product area, which then forms the actual product to be manufactured. For example, the fusing data are used to select a particular laser parameter P_{Max}, which showed in the reference area a maximum laser intensity I_{MaX} or laser power in the working plane of the laser unit and thereby achieved a particularly complete or suitable fusing F_{Max}. For example, the fusing data are used to select a particular laser parameter, which showed in the reference area a predetermined or required laser intensity or laser power in the working plane of the laser unit and thereby achieved a particularly suitable fusing.

As a result, the laser parameter can be adapted or corrected during the additive manufacturing process and in particular before the actual irradiation or scanning of the powder material layer in the actual product area. As a consequence, a very early and fast correction of the laser parameter can be done on basis of reference irradiations of reference areas in either each powder layer or in less than every powder layer as, e.g., in every five to ten powder layers. In any case, the additive manufacturing process can be continuously adapted during the additive manufacturing and not only after the product is entirely finished (potentially with severe continued faults).

Inter alia the supervision of the fusing of the powder material layer in the reference area before fusing the powder material layer in the product area enables a very fast and reactive layerwise process control, which allows achieving premium quality products and avoids the manufacture of deficient products without considerably increasing the manufacturing duration. The overall manufacture and product cost can thereby be reduced.

The additive manufacturing device according to the invention is suitable for additive manufacturing systems as, e.g., selective laser melting systems. Selective laser melting can be understood in that thin layers of fine metal powder are evenly distributed onto a substrate by means of a doctor blade as coating mechanism, which is fastened to an indexing table that moves in a vertical Z axis. This may take place inside a chamber containing a tightly controlled atmosphere of inert gas at very low oxygen levels. The term "substrate" can be understood as the substrate as such or as a previous powder material layer. Once the layer has been distributed, the 2D layer or slice of the product may be fused or hardened by selectively melting the powder. This may be accomplished by means of a high-power laser beam directed in X and Y directions. The laser energy shall be configured to permit a melting and welding of the fine metal powder particles to form a solid metal. This process shall be repeated layer by layer until the product is complete.

The laser unit may be configured to irradiate a powder material spread onto a substrate or another powder material layer. The laser unit may be movably arranged to directly irradiate all positions in the reference area and in the product area and/or may comprise at least a reflector element to indirectly irradiate all positions in the reference area and in the product area. This irradiation or scanning may lead to a fusing or melting or welding of the powder material particles into a solid material block. The laser unit may be configured to irradiate the reference area with at least three different laser parameters to fuse the powder material, preferably with 10 to 20 different laser parameters and more preferably with 2 to 5 different laser parameters.

The laser parameter may be at least one of a group of a laser power, a focal position of the laser in a working plane of the laser unit, a focus diameter of a focal spot, a scan speed of the laser beam, a pulse frequency and/or the like. In an example, the different laser parameters comprise or are different focal positions of the laser unit.

The survey unit may be a direct or a remote temperature-sensing element. In an example, the survey unit is a pyrometer, which from a distance determines a temperature of a surface from a spectrum of thermal radiation the surface emits. In an example, the survey unit is a ratio pyrometer or a two-color pyrometer. In another example, the survey unit is a camera and preferably an On-Axis camera. The camera may be a high speed camera or a hyperspectral camera. The control unit may be a processor. In an example, the control unit is configured to select one of several different laser parameters based on the fusing data and is configured to control the laser unit to irradiate the product area with the selected one of the different laser parameters. In an example, the control unit is configured to select one of the different laser parameters, which provides a required, predetermined or maximum laser power in a working or fusing plane of the laser unit. In more detail, the control unit may be configured to select one of several different focal positions of the laser, which provides a required, predetermined or maximum laser power in the fusing plane of the laser unit. In other focal positions, the laser beam may widen in the fusing or working plane and thereby does not provide the required, predetermined or maximum laser power in the fusing plane.

In an example, the reference area forms a reference object separate to the product to be manufactured. The separate reference object may have a rod or block shape. In another example, the reference area forms a reference object being part of the product to be manufactured or being integral to the product to be manufactured. To be on the safe side, this kind of reference area can not only be irradiated as reference area with different laser parameters, but also additionally irradiated as product area with the selected laser parameter.

In an example, the irradiation with different laser parameters at different locations forms a discontinuous or interrupted pattern in the reference area. In an example, the irradiation with different laser parameters at different locations forms separate dots or lines arranged next to each other. In another example, the irradiation with different laser parameters at different locations forms a continuous or uninterrupted pattern in the reference area. In an example, the irradiation with different laser parameters at different locations forms a wave in the reference area.

The reference area may have a size in a range of about a square centimeter. The reference area may have a size in a range between 0.5 and 1.5 cm². In an example, an irradiation line or distance irradiated into the powder material amounts up to a few millimeters, e.g., between 3 and 7 mm. The reference area may comprise between 80 and 120 lines or wave crests arranged next to each other in a field of about a square centimeter.

In an example, the laser unit is configured to irradiate the reference area dynamically with a continuous series of different laser parameters. In an example, the control unit is configured for a real time control of the laser unit based on the fusing data. In an example, the control element is configured for a continuous control of the laser unit.

The laser unit may repeat irradiations with all or some of the different laser parameters when irradiating the reference area. The irradiation of the reference area may comprise, e.g., 3 to 6 repetitions of the different laser parameters. The irradiation of the reference area may comprise, e.g., 3 to 6 repetitions with at least some pre-selected different laser parameters.

The control unit may further be configured to process the fusing data and the laser parameters into information about a transparency and e.g. a staining of an entry window of the laser unit into a working or process chamber. In case the "best" laser parameter for a required, predetermined or maximum laser intensity in the laser working plane is selected and the fusing data still show suboptimal fusing, the control unit may thereby detect an insufficient transparency and e.g. staining of the entry window of the laser unit.

According to the present invention, also an additive manufacturing system for additively manufacturing a product is presented. The additive manufacturing system comprises the additive manufacturing device as described above and a doctor blade unit. The doctor blade unit is configured to spread powder material onto a substrate or a previous powder material layer.

The term "doctor blade" can be understood as doctor knife, spreading knife, squeegee, scraper, wiper, coater, roller or the like. A doctor blade body and a doctor blade element may be part of a doctor blade unit, which can be understood as any kind of coating mechanism suitable to spread or distribute a material on a substrate or carrier or a previous powder material layer. The doctor blade unit and in particular the doctor blade element may be further suitable to remove excess material from the substrate or the previous powder material layer. The doctor blade element may be held or supported by the doctor blade body and may extend at least partially along the doctor blade body. The doctor blade body and the doctor blade element may be moveable relative to a fixed powder bed. The doctor blade body and the doctor blade element can be one integral part or comprise two or more components.

The additive manufacturing system may further comprise a trigger unit configured to trigger the irradiation of the reference area with different laser parameters, the supervision of this reference irradiations and the control of the laser unit to irradiate the product to be manufactured based on the reference irradiations. This means, the reference irradiations and their use as input for the laser unit control can only or additionally be done in case the trigger unit triggers it, e.g., in case of a failure analyze, as a routine self-diagnosis or the like.

According to the present invention, also an additive manufacturing method for additively manufacturing a product is presented. It comprises the following steps, not necessarily in this order:
a) irradiating a reference area in a powder material with different laser parameters to fuse the powder material,
b) surveying the fusing of the powder material with different laser parameters to gather fusing data as a function of the respective laser parameter, and
c) irradiating a product area in the powder material based on the fusing data.

As a result, the laser parameter can be adapted or corrected during the additive manufacturing process and in particular before the actual irradiation of the powder material layer in the actual product area. As a further consequence, a very early and fast correction of the laser parameter can be done, which allows manufacturing premium quality products and avoids the manufacturing of deficient products without considerably increasing the manufacturing duration. Also, the overall manufacture and product costs can be reduced.

In an example, the controlling step comprises to select one of the different laser parameters based on the fusing data and to control the laser unit to irradiate the product area with the selected laser parameter. In an example, the controlling step comprises to select one of the different laser parameters, which provides a maximum, predetermined or required laser power in a working or fusing plane of the laser unit.

According to the present invention, also a computer program element is presented, wherein the computer program element comprises program code means for causing the additive manufacturing device or system as defined in the independent claims to carry out the steps of the method defined in the independent claim when the computer program is run on a computer controlling the additive manufacturing device or system.

It shall be understood that the additive manufacturing device, the additive manufacturing system, the additive manufacturing method, the computer program element, and the computer readable medium having stored such computer program element according to the independent claims have similar and/or identical preferred embodiments, in particular, as defined in the dependent claims. It shall be understood further that a preferred embodiment of the invention can also be any combination of the dependent claims with the respective independent claim.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the accompanying drawings:
Figure 1 shows schematically and exemplarily an embodiment of an additive manufacturing system and an additive manufacturing device according to the invention for additively manufacturing a product.
Figure 2 shows schematically and exemplarily a top view of a reference area of a powder material.
Figure 3 shows a schematic overview of steps of an additive manufacturing method according to the invention for additively manufacturing a product.

### DETAILED DESCRIPTION OF EMBODIMENTS

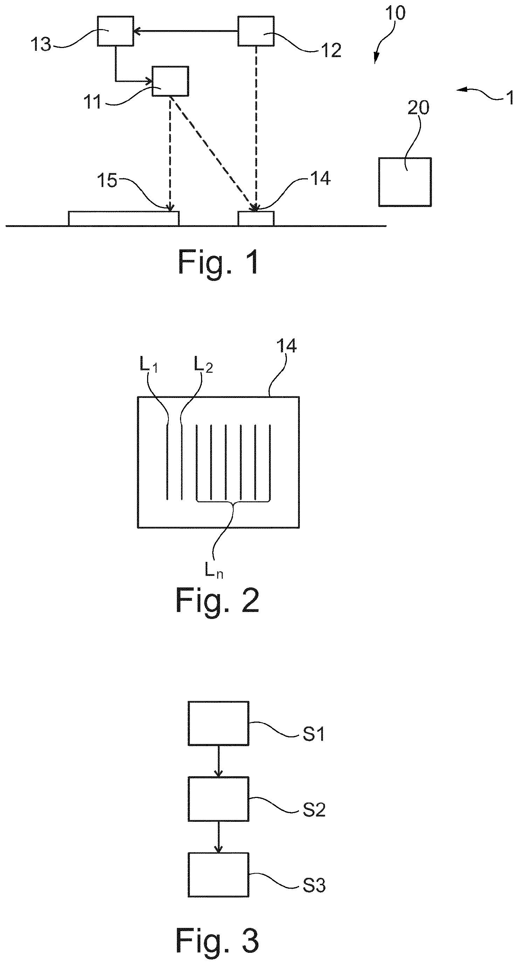

**Figure 1** shows schematically and exemplarily an embodiment of an additive manufacturing system 1 according to the present invention for additively manufacturing a product. The additive manufacturing system 1 comprises a doctor blade unit 20 and an additive manufacturing device 10.

The doctor blade unit 20 may spread powder material onto a substrate or a previous powder material layer. It may be any kind of coating mechanism suitable to spread or distribute a material on a substrate or the like. The doctor blade unit 20 or parts of it are moveable relative to a fixed powder bed.

The additive manufacturing device 10 comprises a laser unit 11, a survey unit 12, and a control unit 13. The laser unit 11 is configured to irradiate a powder material spread onto a substrate, a previous powder material layer or the like. This irradiation leads to a fusing of the powder material particles into a material block.

The laser unit 11 irradiates a reference area 14 of a powder material with different laser parameters to fuse the powder material. The reference area 14 is here a rod-shaped reference object separate to the product to be manufactured. The different laser parameters are here different focal positions of the laser unit 11.

The survey unit 12 surveys or monitors the fusing of the powder material with different laser parameters to gather fusing data as a function of the respective laser parameter. The survey unit 12 is here a remote temperature-sensing element in form of a pyrometer, which determines a temperature of the reference area 14 from a spectrum of thermal radiation the reference area 14 emits.

The control unit 13 controls the laser unit 11 to irradiate a product area 15 of powder material based on the fusing data. The control unit 13 first selects one of the different laser parameters based on the fusing data and then controls the laser unit 11 to irradiate the product area 15 with the selected laser parameter. The selected laser parameter may here be the one, which provides a maximum laser power in a working plane of the laser unit 11. Consequently, the control unit 13 selects the focal position of the laser unit 11, which provides a maximum laser power in the fusing plane of the laser unit 11.

As a result, the reference area 14 of a powder material layer is irradiated before the product area 15 of the powder material layer is irradiated and data and knowledge gained by the "first" irradiation of the reference area 14 are used to improve the "second" irradiation of the product area 15. The reference area 14 and the product area 15 are here arranged at different locations of the same substrate. The irradiation of the reference area 14 is therefore a kind of simulation of the irradiation of the product to be manufactured.

The powder material in the reference area 14 is subsequently irradiated with different laser parameters, wherein single shots of these irradiations with different laser parameters are done at different locations L1...n of the reference area 14. The reference area 14 is irradiated at a point of time T1 with a laser parameter P1 at a location L1 and at a later point of time T2 with a laser parameter P2 at a location L2 up to n irradiations at still later points of time Tn with laser parameters Pn at locations Ln. The laser parameter is here, e.g., a focal position of the laser unit 11.

These different irradiations lead to different fusings of the powder material in the reference area 14, so that a supervision of these fusings allows to gain fusing data assigning a respective laser parameter to a respective fusing result. In other words, different fusings F1...n occur based on the different laser parameters P1...n and these different fusings F1...n are correlated to the different laser parameters P1...n to form the fusing data.

The fusing data are used as basis for an improved irradiation of the powder material in the product area 15, which then forms the actual product to be manufactured. The fusing data are used to select a particular laser parameter, which showed in the reference area 14 a maximum laser intensity or maximum laser power in the working plane of the laser unit 11 and thereby achieved a particularly good or complete fusing.

As a result, the laser parameter can be corrected during the additive manufacturing process and in particular before the actual irradiation of the powder material layer in the actual product area 15. As a consequence, a very early and fast correction of the laser parameter can be done continuously during the additive manufacturing and not only after the product is finished (potentially with severe continued faults).
**Figure 2** shows schematically and exemplarily a reference area 14 of a powder material, which is irradiated by different laser parameters to fuse the powder material. The irradiation with different laser parameters at different locations within the reference area 14 forms a discontinuous and interrupted line pattern in the reference area 14.
**Figure 3** shows a schematic overview of steps of an additive manufacturing method for additively manufacturing a product. The method comprises the following steps, not necessarily in this order:
   - In a first step S1, irradiating a reference area 14 in a powder material with different laser parameters to fuse the powder material.
   - In a second step S2, surveying the fusing of the powder material with different laser parameters to gather fusing data as a function of the respective laser parameter.
   - In a third step S3, irradiating a product area 15 in the powder material based on the fusing data.

The third step S3 may comprise a selecting of one of the different laser parameters based on the fusing data and the controlling of the laser unit 11 may comprise an irradiating of the product area 15 with the selected laser parameter. The selected laser parameter may here be a laser parameter, which provides a maximum laser power in a working plane of the laser unit 11.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the methods described above. Moreover, it may be adapted to operate the components of the above described apparatus'. The computing unit can be adapted to operate automatically and/or to execute the orders of a user. A computer program may be loaded into a working memory of a data processor. The data processor may thus be equipped to carry out the methods of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfil the procedure of an exemplary embodiment of the methods as described above.

According to a further exemplary embodiment of the present invention, a computer readable medium, such as a CD-ROM, is presented wherein the computer readable medium has a computer program element stored on it, which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform the methods according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. An additive manufacturing device (10) for additively manufacturing a product, comprising:
- a laser unit (11),
- a survey unit (12), and
- a control unit (13),
wherein the laser unit (11) is configured to irradiate a reference area (14) in a powder material with different laser parameters to fuse the powder material,
wherein the survey unit (12) is configured to survey the fusing of the powder material with different laser parameters to gather fusing data as a function of the respective laser parameter, and
wherein the control unit (13) is configured to control the laser unit (11) to irradiate a product area (15) in the powder material based on the fusing data.

2. Additive manufacturing device (10) according to claim 1, wherein the control unit (13) is configured to select one of the different laser parameters based on the fusing data and to control the laser unit (11) to irradiate the product area (15) with the selected one of the different laser parameters.

3. Additive manufacturing device (10) according to the preceding claim, wherein the control unit (13) is configured to select the one of the different laser parameters, which provides a maximum laser power in a fusing plane of the laser unit (11).

4. Additive manufacturing device (10) according to one of the preceding claims, wherein the different laser parameters comprise different focal positions of the laser unit (11).

5. Additive manufacturing device (10) according to one of the preceding claims, wherein the laser unit (11) is configured to irradiate different locations in the reference area (14) with different laser parameters.

6. Additive manufacturing device (10) according to the preceding claim, wherein the irradiation with different laser parameters at different locations forms a continuous pattern in the reference area (14) and preferably a wave.

7. Additive manufacturing device (10) according to claim 5, wherein the irradiation with different laser parameters at different locations forms a discontinuous pattern at the reference area (14) and preferably separate dots or lines arranged next to each other.

8. Additive manufacturing device (10) according to one of the preceding claims, wherein the laser unit (11) is configured to irradiate the reference area (14) dynamically with a continuous series of different laser parameters.

9. Additive manufacturing device (10) according to one of the preceding claims, wherein the survey unit (12) is a temperature-sensing element.

10. Additive manufacturing device (10) according to one of the preceding claims, wherein the survey unit (12) is a pyrometer or a camera and preferably an On-Axis camera.

11. Additive manufacturing device (10) according to one of the preceding claims, wherein the control unit (13) is configured for a real time control of the laser unit (11) based on the fusing data.

12. Additive manufacturing device (10) according to one of the preceding claims, wherein the reference area (14) forms a reference object separate to the product to be manufactured.

13. Additive manufacturing device (10) according to one of the claims 1 to 11, wherein the reference area (14) forms a reference object integral to the product to be manufactured.

14. An additive manufacturing system (1) for additively manufacturing a product, comprising the additive manufacturing device (10) according to one of the preceding claims and a doctor blade unit (20) configured to spread powder material onto a substrate or a previous powder material layer.

15. An additive manufacturing method for additively manufacturing a product, comprising the steps of:
- irradiating a reference area (14) in a powder material with different laser parameters to fuse the powder material,
- surveying the fusing of the powder material with different laser parameters to gather fusing data as a function of the respective laser parameter, and
- irradiating a product area (15) in the powder material based on the fusing data.

16. A computer program element for controlling a device or system according to one of the preceding device or system claims, which, when being executed by a processing unit, is adapted to perform the method steps of the preceding method claim.

17. A computer readable medium having stored the computer program element of the preceding claim.

## Amended claims

### Amended claims in accordance with Rule 137(2) EPC.

1. An additive manufacturing device (10) for additively manufacturing a product, comprising:
- a laser unit (11),
- a survey unit (12), and
- a control unit (13),
wherein the laser unit (11) is configured to irradiate a reference area (14) in a powder material subsequently with different laser parameters to fuse the powder material, wherein the survey unit (12) is configured to survey the fusing of the powder material with different laser parameters to gather fusing data as a function of the respective laser parameter, and
wherein the control unit (13) is configured to control the laser unit (11) to irradiate a product area (15) in the powder material based on the fusing data,
**characterized in that** the reference area (14) and the product area (15) are arranged at different locations.

2. Additive manufacturing device (10) according to claim 1, wherein the control unit (13) is configured to select one of the different laser parameters based on the fusing data and to control the laser unit (11) to irradiate the product area (15) with the selected one of the different laser parameters.

3. Additive manufacturing device (10) according to the preceding claim, wherein the control unit (13) is configured to select the one of the different laser parameters, which provides a maximum laser power in a fusing plane of the laser unit (11).

4. Additive manufacturing device (10) according to one of the preceding claims, wherein the different laser parameters comprise different focal positions of the laser unit (11).

5. Additive manufacturing device (10) according to one of the preceding claims, wherein the laser unit (11) is configured to irradiate different locations in the reference area (14) with different laser parameters.

6. Additive manufacturing device (10) according to the preceding claim, wherein the irradiation with different laser parameters at different locations forms a continuous pattern in the reference area (14) and preferably a wave.

7. Additive manufacturing device (10) according to claim 5, wherein the irradiation with different laser parameters at different locations forms a discontinuous pattern at the reference area (14) and preferably separate dots or lines arranged next to each other.

8. Additive manufacturing device (10) according to one of the preceding claims, wherein the laser unit (11) is configured to irradiate the reference area (14) dynamically with a continuous series of different laser parameters.

9. Additive manufacturing device (10) according to one of the preceding claims, wherein the survey unit (12) is a temperature-sensing element.

10. Additive manufacturing device (10) according to one of the preceding claims, wherein the survey unit (12) is a pyrometer or a camera and preferably an On-Axis camera.

11. Additive manufacturing device (10) according to one of the preceding claims, wherein the control unit (13) is configured for a real time control of the laser unit (11) based on the fusing data.

12. Additive manufacturing device (10) according to one of the preceding claims, wherein the reference area (14) forms a reference object separate to the product to be manufactured.

13. An additive manufacturing system (1) for additively manufacturing a product, comprising the additive manufacturing device (10) according to one of the preceding claims and a doctor blade unit (20) configured to spread powder material onto a substrate or a previous powder material layer.

14. An additive manufacturing method for additively manufacturing a product, comprising the steps of:
- irradiating a reference area (14) in a powder material subsequently with different laser parameters to fuse the powder material,
- surveying the fusing of the powder material with different laser parameters to gather fusing data as a function of the respective laser parameter, and
irradiating a product area (15) in the powder material based on the fusing data, **characterized in that** the reference area (14) and the product area (15) are arranged at different locations.

15. A computer program element for controlling a device or system according to one of the claims 1 to 13, which, when being executed by a processing unit, is adapted to perform the method steps of claim 14.

16. A computer readable medium having stored the computer program element of claim 15.
